# EUROPÄISCHE PATENTSCHRIFT

(11) **EP 1 513 094 B1**
(45) Veröffentlichungstag und Bekanntmachung des Hinweises auf die Patenterteilung: **22.03.2006**
(21) Anmeldenummer: 04015349.6
(22) Anmeldetag: 30.06.2004
(51) Int. Cl.: G06K 7/10, G02B 7/08

(54) **Scanner**
Scanner
Dispositif de balayage

(30) Priorität: 05.09.2003 DE 10340924
(43) Veröffentlichungstag der Anmeldung: 09.03.2005
(73) Patentinhaber: SICK AG, 79183 Waldkirch (DE)
(72) Erfinder: Nübling, Ralf Ulrich, 79211 Denzlingen (DE)
(74) Vertreter: Ludewigt, Christoph

(56) Entgegenhaltungen:
- WO-A-93/14470

## Beschreibung

Die Erfindung betrifft eine Identifikationseinrichtung, insbesondere einen Codeleser, zur Erfassung von ein- und/oder von zweidimensionalen Codes mit einem in einem Gehäuse angeordneten ortsauflösenden Lichtempfänger und einer diesem zugeordneten ebenfalls im Gehäuse eingebauten Empfangsoptik.

Bei den aus dem Stand der Technik bekannten Identifikationseinrichtungen wird von der Empfangsoptik, in dessen Bildebene ein Abbild von einem in der Objektebene vorhandenen Code, entworfen. In dieser Bildebene befindet sich der ortsauflösende Lichtempfänger, bei welchem mehrere Lichtempfängerpixel zeilen-oder matrixförmig angeordnet sind.

Die im Code und demzufolge auch im Abbild des Codes vorhandenen unterschiedlichen Kontraste erzeugen in den einzelnen Lichtempfängerpixel unterschiedliche Photoströme, aus denen dann über eine Signalverarbeitung der Codeinhalt identifizierbar ist.

Derartige Codierungen werden in vielseitigen Anwendungsgebieten eingesetzt, so zum Beispiel zur Identifizierung und Steuerung einzelner Objekte in der Fördertechnik. Dabei ist der Code nicht auf eine bestimme Codeart beschränkt, sondern umfasst alle, mit einer Bildverarbeitungseinrichtung erkennbaren Varianten von Informationsträgern.
Von leistungsfähigen Identifikationseinrichtungen wird heute erwartet, dass immer größere Informationsmengen auf möglichst kleinen Codeflächen gelesen werden können. Dies bedeutet, dass von der Identifikationseinrichtung eine hohe Ortsauflösung gefordert wird. Insbesondere dann, wenn sich der Code noch zusätzlich innerhalb eines großen Tiefenschärfenbereiches befindet, sind an die Identifikationseinrichtung hohe Anforderungen gestellt. Eine weitere Anforderung an leistungsstarke Identifikationseinrichtungen besteht in der hohen Leserate, welche eine lichtstarke Empfangsoptik erforderlich macht. Diese beiden Bedingungen, d. h. großer Tiefenschärfebereich und gleichzeitig lichtstarke Empfangsoptik setzen voraus, dass die Identifikationseinrichtung mit einem automatischen Fokussierungssystem ausgerüstet sein muss.

Bei den bekannten Identifikationseinrichtungen mit automatischem Fokussierungssystem erfolgt die Fokussierung entweder dadurch, dass die gesamte Empfangsoptik oder ggf. auch nur Baugruppen oder einzelne Komponenten davon in Richtung der optischen Achse bewegt werden, während der ortsauflösende Lichtempfänger stationär positioniert ist. Üblicherweise wird dazu mit Hilfe eines Servomotors die in einer Gewindefassung montierte Optik durch Drehung verschoben. Bei lichtstarken langbrennweitigen Empfangsobjektiven sind, aufgrund der relativ großen Masse der dabei zu bewegenden Komponenten, die Grenzen vorgegeben. Auch wegen der mechanischen Belastung im Bereich der Lagerungen sowie beim kontinuierlichen Einsatz über einen längeren Zeitraum hinweg, stellen derartige Systeme keine Lösung da. Darüber hinaus benötigt dieser Fokussiervorgang in der Regel auch viel Zeit und ist deshalb nicht in der Lage, auf schnell wechselnde Codeabstände zu reagieren.

Bei der zweiten Gruppe der ebenfalls bekannten Identifikationseinrichtungen mit automatischem Fokussierungssystem erfolgt die Fokussierung dadurch, dass die Empfangsoptik stationär angeordnet ist, während der ortsauflösende Lichtempfänger ggf. mitsamt der ihn tragenden Leiterplatte inkl. weiterer elektronischer Bauteile in Richtung der optischen Achse verstellbar gelagert ist. Eine solche Vorrichtung ist zum Beispiel aus der US 5,245,172 bekannt. Neben der bei diesem Autofokussierungsvorgang auftretenden mechanischen Belastung des Lichtempfängers inkl. weiterer elektrischer Komponenten ist es zusätzlich noch notwendig, dass eine mehradrige elektrische Verbindung kontinuierlich einer Bewegung ausgesetzt wird. Da diese Fokussierung über die Lebensdauer einer Identifikationseinrichtung betrachtet im Bereich von 10⁷ bis 10⁹ Zyklen liegen können, sind Unterbrechungen im Bereich der elektrischen Verbindung oder Zerstörungen an den mechanisch beanspruchten Komponenten nicht auszuschließen.

Aus der WO 93/14470 ist ein transportables optisches Codelesesystem bekannt, bei welchem der optische Weg d. h. der wirksame Abstand zwischen der Empfangsoptik und dem ortsauflösenden Lichtempfänger zum Zwecke der Fokussierung veränderbar ist. Dies wird nach der WO 93/14470 dadurch erreicht, dass der Strahlengang zwischen der Empfangsoptik und dem ortsauflösenden Lichtempfänger Z-förmig gefaltet ist. Ein optisches Element bei dieser Faltung des Strahlenganges ist ein planer Umlenkspiegel der an der Koppel eines Gelenkviereckes angebracht ist.

Es ist vorteilhaft, wenn eine gattungsgemäße Vorrichtung ein automatisches Fokussiersystem aufweist, das zur optimalen Identifikation in der Lage ist, sich über einen längeren Zeitraum schnell und verschleißfrei auf unterschiedliche Objektabstände anzupassen.

Dazu ist es vorteilhaft dass die gesamte Empfangsoptik sowie der ortsauflösende Lichtempfänger fest und unverrückbar im Gehäuse der Identifikationseinrichtung angeordnet sind und die wirksame optische Bildschnittweite nur durch einen zwischen dem Lichtempfänger und der Empfangsoptik angeordneten verstellbaren Umlenkspiegel veränderbar ist.

Der Vorteil dieser Ausbildung der Fokussierung ist darin zu sehen, dass nur ein einfacher Umlenkspiegel verstellt wird, an dem keine elektrischen Anschlüsse vorhanden sind und der darüber hinaus auch nur eine geringe Masse besitzt. Das Empfangsobjektiv, der Lichtempfänger und sämtliche elektrische Verbindungen sind dabei in genauer optischer Justage unveränderlich im Gehäuse angeordnet. Eine solche Identifikationseinrichtung ist dadurch in der Lage, sich ohne großen Energieaufwand relativ schnell und verschleißfrei über einen längeren Zeitraum auf Codes zu fokussieren, die sich in unterschiedlichen Abständen zu der Identifikationseinrichtung befinden.

Der Umlenkspiegel ist mit einem Schwenkarm verbunden, der über eine Drehachse beweglich gelagert ist. Durch Drehung des Schwenkarmes und damit des Umlenkspiegels um die Drehachse, die senkrecht zur optischen Achse der Empfangsoptik ausgerichtet ist, verlängert, bzw. verkürzt sich die wirksame optische Bildschnittweite zwischen der Empfangsoptik und dem ortsauflösenden Lichtempfänger.

Erfindungsgemäß besteht die mechanische Koppelung zur Verstellung des Umlenkspiegels mit dem Gehäuse der Identifikationseinrichtung nur aus einem flexibles Federband. Die erfindungsgemäße Vorrichtung ist den Gleit- oder Kurvenführungen des Standes der Technik sowohl in wirtschaftlicher als auch in technischer Hinsicht überlegen. Dieser Vorteil gilt insbesondere für die Veränderung des Umlenkspiegels über den Schwenkarm. Besonders dann, wenn es sich um eine gekreuzte Federbandanordnung handelt, ist für diese Aufgabe eine sehr gut definierte, spielfreie Drehlagerfunktion gegeben, die auch über längere Zeiträume hinweg eine stabile, verschleißfreie Drehbewegung sicherstellt.

Vorteilhafterweise sind die Lage der Drehachse und die Länge des Schwenkarmes dabei so auf die optischen Daten der Empfangsoptik abgestimmt, dass neben dieser Bildweitenänderung gleichzeitig der Umlenkwinkel so verändert wird, dass sich das Zentrum des Abbildes auf dem Lichtempfänger nicht oder nur unwesentlich verändert. Dabei ist vorgesehen, dass sich bei der Fokussierung über den Umlenkspiegel das Bildzentrum durch die Fokussierung auf dem Lichtempfänger nicht verschiebt. Das Beibehalten dieser Zuordnung von Bildzentrum und dem ortsauflösenden Lichtempfänger innerhalb des Fokussierbereiches bietet den Vorteil, dass sich damit die Richtung des Sichtbereiches nicht verändert. Die Identifikationseinrichtung ist dadurch in der Lage, neben der Identifikation des Codeinhaltes auch eine Aussage über die aktuelle Position des Codes zur Emp-fangsachse zu ermitteln.

Vorteilhafterweise ist dabei vorgesehen, dass mittels nur einer mechanischen Stellgröße gleichzeitig eine Orts- und Winkelverstellung des Umlenkspiegels durchführbar ist. Dies bedeutet, dass der zur Fokussierung notwendige Aufwand platzsparend und preiswert herstellbar ist.

In Abhängigkeit von den erforderlichen Fokussierparametern, d. h. der Fokussiergeschwindigkeit, der Wiederholfrequenz sowie dem Fokussierbereich sind sowohl lineare als auch zirkulare Aktoren verwendbar. Dies ermöglicht den optimalen Aktor, wozu beispielsweise auch Magnettauchspulen, Pneumatik-/Hydraulikzylinder usw. gehören, verwenden zu können.

Die Erfindung wird im Folgenden beispielhaft unter Bezugnahme auf die Figuren erläutert; in diesen zeigen:
- **Fig. 1**: eine schematische Seitenansicht von einer Identifikationseinrichtung mit einer Fokussierungseinrichtung durch Verstellung eines Umlenkspiegels über einem Schwenkarm bei einer Fokussierung auf eine mittlere Objektschnittweite,
- **Fig. 2**: eine schematische Seitenansicht, entsprechend Fig. 1, bei einer Fokussierung auf die maximale Objektschnittweite,
- **Fig. 3**: eine schematische Seitenansicht von einer Identifikationseinrichtung mit einer Fokussierungseinrichtung durch Verstellung eines Umlenkspiegels über ein Gelenkviereck.

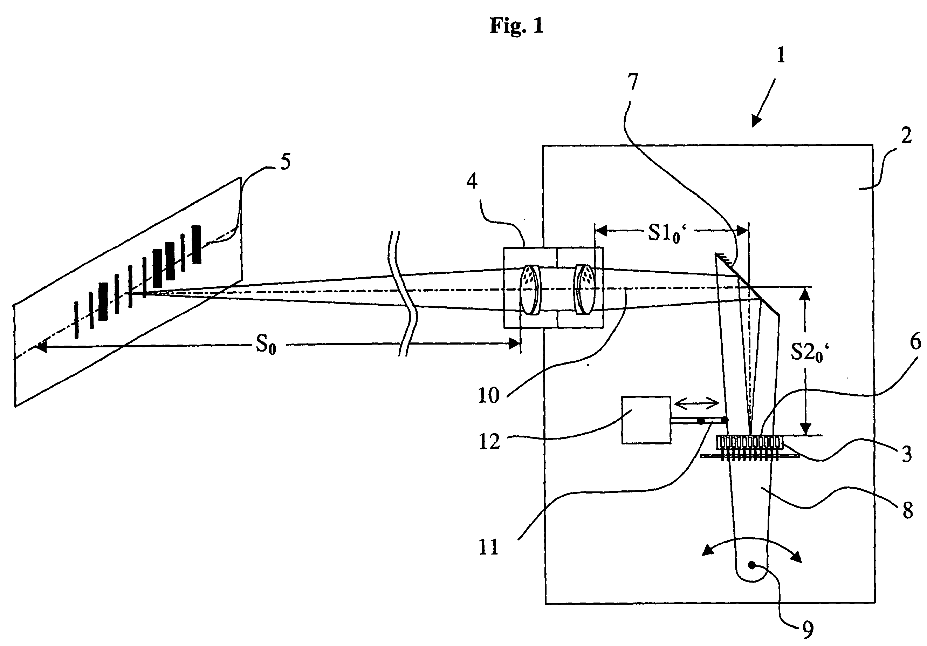

In Fig. 1 ist die Identifikationseinrichtung als Codeleser 1 beispielhaft dargestellt. Der Codeleser 1 besitzt in einem Gehäuse 2 einen ortsauflösenden Lichtempfänger 3. Dieser ortsauflösende Lichtempfänger 3 kann bei der Erfassung eines eindimensionalen Code beispielsweise als eine CCD-Linie oder CMOS-Linie ausgebildet sein. Beim Einsatz des Codelesers zur Erfassung von zweidimensionalen Informationen ist der ortsauflösende Lichtempfänger 3 dann beispielsweise eine CCD-Fläche oder eine CMOS-Fläche. Ebenfalls im Gehäuse 2 ist eine Empfangsoptik 4 eingebaut, die ein Abbild von einem Objekt 5 auf der Oberfläche 6 des ortsauflösenden Lichtempfängers 3 entwirft.
Abhängig von der Einsatzbedingung und der jeweiligen Aufgabenstellung des Codelesers wird das Objekt zusätzlich von einer in der Fig. 1 nicht dargestellten Beleuchtungseinrichtung ausgeleuchtet. Diese Beleuchtungseinrichtung, die mit einer oder mehreren Lichtquellen ausgestattet ist, kann entweder im Codeleser 1 integriert sein oder ist als eine eigenständige externe Einheit ausgeführt.

Befindet sich, wie in Fig. 1 dargestellt, das Objekt 5 in einer Objektschnittweite s₀ vom Codeleser entfernt, so wird das Abbild des Objektes in einer Bildschnittweite s₀' (s₀' = s1₀'+s2₀') entworfen. Die Größe der Bildschnittweite s' wird dabei im Wesentlichen durch die Objektschnittweite s und die Brennweite der Empfangsoptik 4 bestimmt. Der Verlauf des Lichtes zwischen der Empfangsoptik 4 und dem ortsauflösenden Lichtempfänger 3 wird durch einen planen Umlenkspiegel 7 um ca. 90° umgelenkt. Die Bildschnittweite s' wird dadurch in die zwei Teilstrecken s1' und s2' aufgeteilt. Die Oberfläche des Umlenkspiegels 7 ist rechtwinklig auf einem Schwenkarm 8 befestigt. Mechanisch verbunden mit dem Gehäuse 2 ist der Schwenkarm 8 über eine Drehachse 9, welche senkrecht zur optischen Achse 10 der Empfangsoptik verläuft. Über eine bewegliche Schubstange 11 ist ein linearer Aktor 12 mit dem Schwenkarm 8 verbunden. Der Aktor 12 ist somit in der Lage, den Schwenkarm 8 und damit den Umlenkspiegel 7 um die Drehachse 9 zu verschwenken. Neben dem in Fig.1 symbolisch dargestellten Aktor 12 sind auch weitere Aktoren zur Bewegung des Schwenkarmes möglich. So kann zum Beispiel an der Drehachse 9 ein zirkularer Aktor in Form eines Schrittmotors angeordnet werden. Grundsätzlich sind für die Bewegung des Schwenkarmes auch Magnettauchspulen, Pneumatik-/Hydraulikzylinder usw. denkbar.

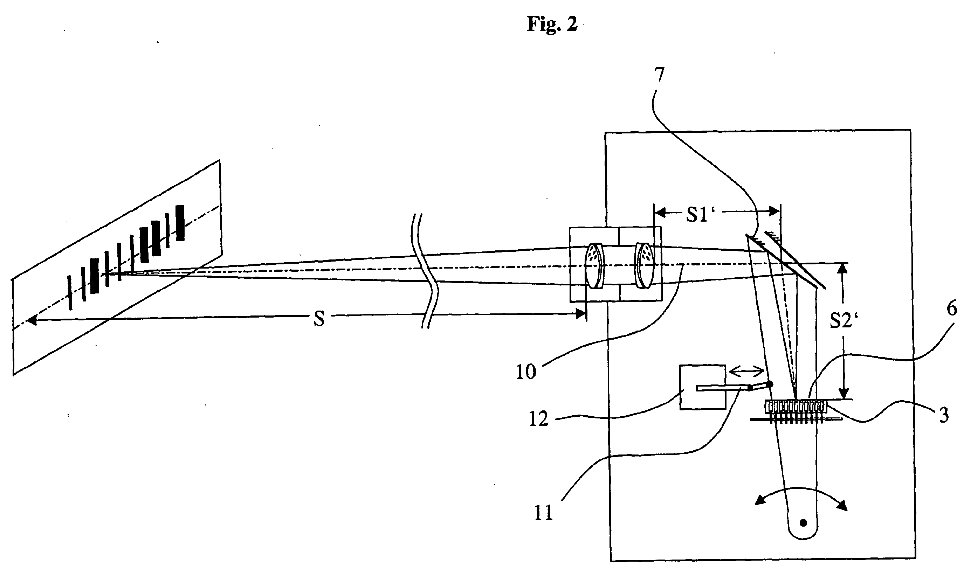

In Fig. 2 hat sich die Objektschnittweite s gegenüber dem in Fig. 1 dargestellten Zustand vergrößert, d. h. der Code ist weiter vom Codeleser entfernt. Als Folge davon wird die Bildschnittweite s' = s1'+s2' geringer. Damit auf der Oberfläche 6 des ortsauflösenden Lichtempfängers 3 ein exaktes Abbild vorhanden ist, wird der Schwenkarm 8 und damit auch der Umlenkspiegel 7 soweit in Richtung der Empfangsoptik 4 bewegt, bis die auf die Objektschnittweite s abgestimmte Bildschnittweite s' = s1'+s2' erreicht ist.

Analog zu Fig. 2 wird bei einer Verkürzung der Objektschnittweite s gegenüber dem in Fig. 1 dargestellten Zustand der Schwenkarm 8 und damit auch der Umlenkspiegel 7 so weit von der Empfangsoptik 4 wegbewegt, bis die nun vergrößerte Bildschnittweite s' = s1'+s2' erreicht ist.

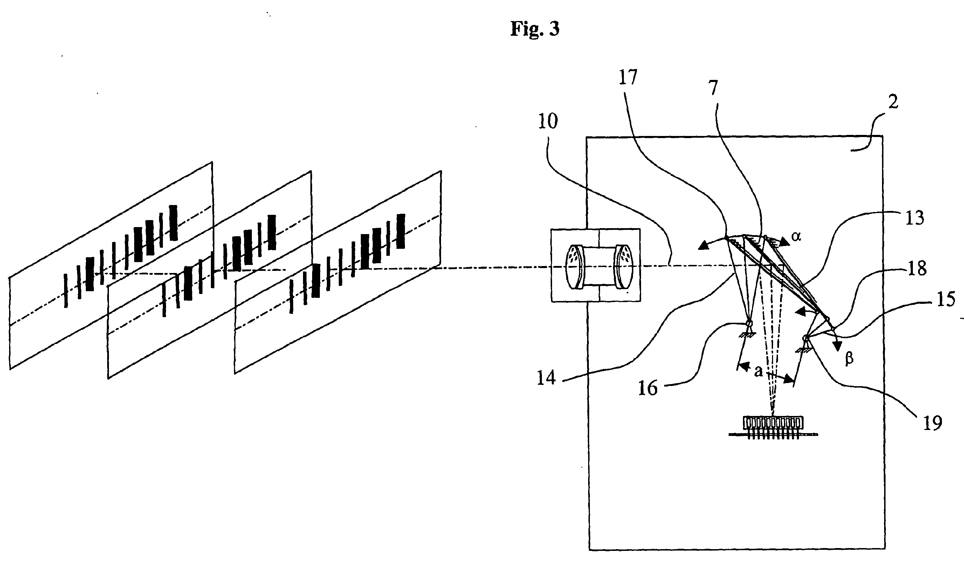

In Fig. 3 ist der Umlenkspiegel 7 auf einer Koppel 13 eines Gelenkviereckes angebracht. Das Gelenkviereck besteht neben der Koppel 13 aus zwei Lenkern 14 und 15. Der Lenker 14 ist auf einer Seite mit einem im Gehäuse 2 fixierten Drehlager 16 verbunden. Das andere Ende des Lenkers 14 ist mittels eines nicht fixierten Drehlagers 17 mit der Koppel 13 verbunden. Der Lenker 15 verbindet die zweite Seite der Koppel 13 an einem Lager 18 mit einem zweiten im Gehäuse fixierten Drehlager 19. Die Achsen aller vier Drehlager 16, 17, 18 und 19 sind senkrecht zur optischen Achse 10 der Empfangsoptik ausgerichtet.
Wird der Lenker 14 im Drehlager 16 um einen definierten Winkelbetrag α verschwenkt, so dreht sich der Lenker 15 aufgrund der Verbindung über die Koppel 13 um einen Winkelbetrag β. Der Bewegungsablauf der Koppel 13 und damit auch die Orts- und Winkelveränderung des Umlenkspiegels 7 zur optischen Achse 10 der Empfangsoptik wird also von der Geometrie des Gelenkviereckes bestimmt. Die wesentlichen Parameter sind dabei die Länge der Koppel 13, die Längen der Lenker 14 und 15 sowie der Abstand a der beiden im Gehäuse fixierten Drehlager 16 und 19.
Die in der Beschreibung von Fig. 1 aufgezeigten Möglichkeiten zur Einkoppelegung der Stellgröße für die Orts- und Lageveränderung des Umlenkspiegels 7 sind auch bei der Lösung mit einem Gelenkviereck durchführbar. So kann beispielsweise ein linearer Aktor an einem der beiden Lenker 14 oder 15 angreifen oder ein zirkularer Aktor kann an einem der beiden fixen Drehlager 16 oder 19 angekoppelt sein.

Da die zur Verstellung des Umlenkspiegels 7 notwendigen Winkeländerungen an den Drehlagern sowohl bei der in Fig. 1 und 2 beschriebenen Lösung mit einem Schwenkarm, als auch bei der Lösung mittels einem Gelenkviereckes nur relativ gering sind, können die einzelnen Drehlager auch durch mechanische Verbindungen in Form eines Scharniers ausgeführt werden. Eine derartige Scharnierfunktion lässt sich erfindungsgemäß mit einem flachen, flexiblen Federband sehr preiswert herstellen. Dabei wird ein Ende des Federbandes an einem Fixpunkt im Gehäuse fest eingespannt, während am anderen freien Ende beispielsweise der Schwenkarm 8 oder der Lenker 14 bzw. 15 fixiert sind. Derartige Scharniere erfüllen insbesondere bei kleinen Drehwinkeln eine sehr gute, spielfreie Drehfunktion, die auch über längere Zeiträume hinweg eine stabile, verschleißfreie Drehbewegung sicherstellt.

## Patentansprüche

1. Identifikationseinrichtung, insbesondere zur Erfassung von ein- und/oder von zweidimensionalen Codes mit einem, in einem Gehäuse (2) angeordneten ortsauflösenden Lichtempfänger (3), einer diesem zugeordneten ebenfalls im Gehäuse (2) eingebauten Empfangsoptik (4) sowie einem auf einer optischen Achse (10) zwischen dem Lichtempfänger (3) und der Empfangsoptik (4) angeordneten Umlenkspiegel (7), der über einen Schwenkarm (8) in einer am Gehäuse (2) angebrachten Drehachse (9) gelagert ist und bei Drehung über eine Orts- und Winkelveränderung die wirksame optische Bildschnittweite (s') verändert, **dadurch gekennzeichnet, dass** das Drehgelenk mindestens ein flaches, flexibles Federband aufweist, welches mit seinen beiden Enden mit den gegeneinander zu verdrehenden Teilen verbunden ist.

2. Identifikationseinrichtung nach Anspruch 1, **dadurch gekennzeichnet, dass** bei Veränderung der Bildschnittweite (s') das Zentrum des Abbildes auf dem Lichtempfänger (3) nahezu unverändert ist.

3. Identifikationseinrichtung nach einem der vorhergehenden Ansprüche, **dadurch gekennzeichnet, dass** mittels eines linearen oder zirkularen Aktors gleichzeitig eine Orts- und Winkelveränderung des Umlenkspiegel (7) durchführbar ist.

4. Identifikationseinrichtung nach einem der vorhergehenden Ansprüche, **dadurch gekennzeichnet, dass** der Umlenkspiegel (7) in einer Drehachse (9) gelagert ist, welche senkrecht zur optischen Achse (10) der Empfangsoptik (4) verläuft.

5. Identifikationseinrichtung nach Anspruch 4, **dadurch gekennzeichnet, dass** der Umlenkspiegel (7) einen begrenzten Drehwinkelbereich besitzt.

6. Identifikationseinrichtung nach einem der vorhergehenden Ansprüche, **dadurch gekennzeichnet, dass** das Drehgelenk aus einer gekreuzten Federbandanordnung besteht.

## Claims

1. Identification device, in particular for detecting one-dimensional and/or two-dimensional codes, having a spatially resolving photoreceiver (3) arranged in a housing (2), a receiving optics (4) assigned to said photoreceiver and likewise installed in the housing (2) and, a deflecting mirror (7) which is arranged on an optical axis (10) between the photoreceiver (3) and the receiving optics (4) and is supported via a pivoting arm (8) on a rotation spindle (9) fitted on the housing (2) and, upon rotation, varies the effective optical back focal distance (s') by varying the location and angle, **characterized in that** the rotary joint has at least one flat, flexible spring strip which is connected with both its ends to the parts to be rotated against one another.

2. Identification device according to Claim 1, **characterized in that** upon variation of the back focal distance (s') the centre of the image on the photoreceiver (3) is virtually unchanged.

3. Identification device according to one of the preceding claims, **characterized in that** a position and angle of the deflecting mirror (7) can be varied simultaneously by means of a linear or circular actuator.

4. Identification device according to one of the preceding claims, **characterized in that** the deflecting mirror (7) is supported on a rotation spindle (9) which runs perpendicular to the optical axis (10) of the receiving optics (4).

5. Identification device according to Claim 4, **characterized in that** the deflecting mirror (7) has a restricted range of rotation angle.

6. Identification device according to one of the preceding claims, **characterized in that** the rotary joint consists of a crossed spring strip arrangement.

## Revendications

1. Dispositif d'identification, destiné notamment à la saisiè de codes à une et/ou à deux dimensions, comportant des récepteurs de lumière (3) à résolution locale disposés dans un boîtier (2), une optique de réception (4) associée à ce dernier, également montée dans le boîtier (2), ainsi qu'un miroir de déviation (7) disposé sur un axe optique (10) entre le récepteur de lumière (3) et l'optique de réception (4), lequel miroir est monté par l'intermédiaire d'un bras pivotant (8) sur un axe de rotation (9) fixé sur le boîtier (2), et, lors d'une rotation, modifie la distance vertex-image optique effective (s') par l'intermédiaire d'une modification locale et angulaire, **caractérisé en ce que** l'articulation tournante comporte au moins un ressort à ruban flexible plat qui est relié par ses deux extrémités aux composants à orienter les uns vers les autres.

2. Dispositif d'identification selon la revendication 1, **caractérisé en ce que**, lors de la modification de la distance focale (s') d'image, le centre de l'image est pratiquement inchangé sur le récepteur de lumière (3).

3. Dispositif d'identification selon l'une des revendications précédentes, **caractérisé en ce qu'**une modification locale et angulaire du miroir de déviation (7) peut être effectuée simultanément au moyen d'un actionneur linéaire ou circulaire.

4. Dispositif d'identification selon l'une des revendications précédentes, **caractérisé en ce que** le miroir de déviation (7) est monté dans un axe de rotation (9) qui s'étend perpendiculairement à l'axe optique (10) de l'optique de réception (4).

5. Dispositif d'identification selon la revendication 4, **caractérisé en ce que** la plage d'angle de rotation du miroir de déviation (7) est limitée.

6. Dispositif d'identification selon l'une des revendications précédentes, **caractérisé en ce que** l'articulation tournante est constituée d'un système croisé de bande à ressort.
